# FASCICULE DE BREVET EUROPEEN

(11) **EP 1 354 288 B1**
(45) Date de publication et mention de la délivrance du brevet: **29.03.2006**
(21) Numéro de dépôt: 02729487.5
(22) Date de dépôt: 09.01.2002
(51) Int. Cl.: G06Q 20/00, G07F 19/00

(54) **PROCEDE UTILISANT LES CARTES DE PAIEMENT ELECTRONIQUES POUR SECURISER LES TRANSACTIONS**
VERFAHREN MIT ELEKTRONISCHEN BANKDATEN ZUR DURCHFÜHRUNG SICHERER TRANSAKTIONEN
METHOD USING ELECTRONIC BANKING CARDS FOR MAKING SECURE TRANSACTIONS

(30) Priorité: 16.01.2001 FR 0100628
(43) Date de publication de la demande: 22.10.2003
(73) Titulaire: Axalto S.A., 92120 Montrouge (FR); Schlumberger Malco, Inc., Owings Mills, MD 21117 (US)
(72) Inventeur: GUION, Christian, F-91370 Verrière le Buisson (FR); SAUVEBOIS, Jean-Paul, F-92120 Montrouge (FR)
(74) Mandataire: Cassagne, Philippe M.J.
(86) Numéro de dépôt international: PCT/IB2002/000040
(87) Numéro de publication internationale: WO 2002/056216

(56) Documents cités:
- EP-A- 1 028 401
- WO-A-00/33497
- WO-A-99/49424
- US-A- 6 000 832
- US-A- 6 038 551

## Description

La présente invention concerne un procédé et tout dispositif de mise en oeuvre correspondant, utilisant les cartes de paiement pour sécuriser les transactions commerciales et notamment les transactions électroniques effectuées sur le réseau Internet. La présente invention concerne plus particulièrement l'utilisation de cartes de paiement électroniques encore appelées cartes à puce pour obtenir un numéro de carte de paiement temporaire.

Le terme "carte de paiement" est ici utilisé pour désigner toute carte bancaire à débit différé ou immédiat, toute carte de crédit, etc., émise par une banque ou un établissement spécialisé. Une carte de paiement offre principalement le service suivant : le titulaire de la carte est à même, selon des conditions déterminées notamment quant aux montants des transactions (montants par transaction et/ ou montants: cumulés par semaine, etc.), de payer un produit ou un service auprès d'un fournisseur agréé par simple signature d'une facture. Cette signature peut être manuscrite ou encore électronique, il s'agit alors de saisir un code secret appelé code PIN (Personnal Identification Number) tel que par exemple une suite de quatre chiffres, ou bien encore une série alphanumérique de longueur quelconque.

Les cartes de paiement sont donc délivrées sur demande de leur clientèle par les établissements financiers pour une durée (généralement un à deux ans renouvelables) et pour des conditions de paiement bien définies. Ces cartes sont payantes à la fois pour leurs possesseurs (droit d'entrée, abonnement...) et par les fournisseurs accrédités qui reversent un pourcentage de leur chiffre d'affaires facturé au moyen des cartes bancaires.

Les avantages présentés par les cartes de paiement tant pour leurs titulaires (plus besoin notamment de gérer des liquidités, possibilité de payer à crédit, etc.) et pour les fournisseurs (risque d'impayés quasi nul) font qu'aujourd'hui, les transactions réglées au moyen de cartes de paiement se généralisent.

Les cartes de paiement sont remises physiquement à leurs titulaires par les établissements émetteurs sous la forme classique d'une carte rectangulaire en matière plastique d'environ 8cm sur 5cm. Au recto de la carte sont généralement inscrits en relief le nom du titulaire de la carte, une date d'expiration, un numéro de carte (à 16 chiffres) ainsi qu'éventuellement un numéro de compte. La carte porte également le nom de l'établissement émetteur ainsi que différents dessins ou Hologrammes visant à rendre sà reproduction difficile. Au verso de la carte un emplacement est prévu pour la signature du titulaire de la carte.

Les cartes de paiement sont également classiquement munies de pistes magnétiques et/ou de circuits intégrés où sont codées un certain nombre d'informations et notamment un code secret connu du seul titulaire de la carte : le code PIN. Ces pistes magnétiques ou circuits électroniques permettent d'utiliser ces cartes comme moyens d'accès et de paiement dans de nombreux automates ainsi que dans les distributeurs automatiques de billets ou DAB. Ces pistes magnétiques ou circuits électroniques servent également à assurer la sécurité des transactions en permettant de contrôler que le porteur de la carte est bien le titulaire de la carte, celui-ci devant en effet saisir son code secret sur le clavier d'un appareil lecteur de carte qui contrôle la concordance des numéros avec celui qu'il lit sur les pistes magnétiques ou dans le circuit électronique, dans ce dernier cas l'appareil lecteur de carte exploite un algorithme à clé secrète implémenté à l'intérieur du circuit intégré de la carte.

La sécurité des transactions effectuées au moyen de cartes de paiement repose aujourd'hui sur deux éléments : sur le contrôle de l'authenticité de la signature apposée par le titulaire de la carte sur la facture, signature manuscrite ou électronique, et sur le contrôle de l'authenticité et de la validité de la carte en interrogeant l'établissement émetteur de la carte afin d'obtenir l'autorisation d'accepter cette carte.

Ce double contrôle est classiquement opéré par le fournisseur lorsqu'il peut disposer de la carte de paiement et de son titulaire. La vérification de la signature manuscrite ou électronique est en effet aisée, de même pour ce qui est de la demande d'autorisation préalable. Il existé d'ailleurs des terminaux de paiement lecteurs de cartes adaptés à effectuer automatiquement de tels contrôles.

Le titulaire de la carte saisit sur le clavier d'un tel terminal, le code secret de sa carte, encore appelé code PIN (PIN étant l'acronyme anglais de Personnal Identification Number). Les circuits électroniques comparent alors le code secret saisi par le titulaire au code inscrit de manière crypté sur la carte et ils valident la transaction en cours lorsqu'il y a coïncidence entre les deux. Par ailleurs, à partir des informations lues sur la carte, le terminal est à même d'interroger par l'intermédiaire d'un réseau de télécommunication, un serveur de gestion des cartes de paiement qui lui confirme si la carte est bien valide et n'est pas frappée d'interdiction. Cette vérification quant à la validité de la carte pouvant se faire "on line" en appelant le serveur lors de la transaction, ou bien encore "off line" grâce au téléchargement régulier des listes de cartes interdites (listes noires ou black lists) et/ou des listes de cartes authentiques (listes positives ou white lists). Il est à noter que l'utilisation de cartes à circuits électroniques permet de contrôler directement l'authenticité de la carte.

La consultation des serveurs de gestion pour connaître le statut de la carte combinée à l'utilisation d'un code secret connu du seul titulaire de la carte limite généralement les fraudes sur les transactions réglées par cartes de paiement, lesquelles constituent alors un des moyens de paiement les plus sûrs.

Il n'en va toutefois plus de même, lorsque le titulaire de carte et le fournisseur sont loin l'un de l'autre et que l'usage d'un terminal de paiement lecteur de cartes notamment pour tester le code secret de la carte n'est alors pas possible.

En effet, pour opérer une transaction lorsque le titulaire de la carte et le fournisseur sont loin l'un de l'autre, par exemple lors d'un achat par correspondance, ou lors d'une réservation par téléphone ou encore lors d'une transaction électronique sur l'Internet, le titulaire doit aujourd'hui communiquer ouvertement des informations sur sa carte comme le numéro de sa carte de paiement et la date d'expiration de cette dernière. La transmission de ces seules informations suffit pour valider une facture que le fournisseur est ensuite à même de présenter pour encaissement à l'établissement émetteur de la carte.

La simplicité du mécanisme actuel d'acquittement par carte de paiement des transactions opérées à distance est à l'origine d'un grand nombre de fraudes, puisque toute personne ayant la connaissance d'un numéro de carte de paiement et de la date d'expiration dé cette dernière peut utiliser ces informations de façon illégales pour acheter des biens ou des services et ce, tant que le véritable possesseur de la carte ne se rend pas compte des détournements dont il est victime et ne fait pas opposition auprès de l'établissement émetteur de la carte. Par ailleurs, ce système autorise des reniements abusifs de la part d'acheteurs indélicats qui refusent de voir débiter leur compte au prétexte mensonger que les transactions ont été effectuées à leur insu.

Cela est particulièrement vrai pour les transactions électroniques réalisées sur l'Internet puisque, sur un tel réseau de communication ouvert, il est particulièrement facile d'intercepter les informations qui y sont échangées. Cette insécurité est aujourd'hui un frein important au commerce sur l'Internet.

De nombreuses tentatives ont été lancées pour pallier cet inconvénient et rendre les transactions à distance plus sûres et notamment les transactions électroniques.

Parmi ces tentatives, on peut citer les systèmes du type SET qui consistent à crypter les informations échangées sur Internet. Avec de tels systèmes les numéros de cartes bancaires ne sont donc plus communiqués ouvertement et ne sont donc plus interceptables.

Un tel système apparaît certes relativement sûr, puisque le numéro de la carte de paiement du titulaire n'est plus accessible, mais surtout lourd et coûteux à mettre en place puisqu'il concerne des centaines de milliers de sites commerciaux, des milliers d'établissements financiers et des millions de clients !

Pour pallier ces inconvénients, une solution développée par la Demanderesse consiste à ce que chaque utilisateur obtienne d'un serveur approprié géré par son organisme financier une carte bancaire virtuelle valable que pour un nombre limité de transactions et de préférence pour une seule transaction. L'utilisateur en fait donc la demande à chaque transaction et une fois qu'il l'a obtenue, il n'a plus qu'à saisir le numéro de cette carte lors de la procédure d'acquiftement avec le site marchand. Le site marchand accueille ce numéro sans faire de distinction avec un numéro de carte réelle et traite la transaction de façon similaire. Ce système est donc parfaitement neutre quant à l'infrastructure des sites marchands. Par ailleurs, si ce numéro est piraté, il ne peut être utilisé à nouveau puisque dès qu'une transaction a été enregistrée, le numéro devient inactif et ne peut plus servir à débiter le compte de l'utilisateur.

Différents modes d'émission d'une telle carte ont été développés et en particulier celui consistant à se servir d'un téléphone portable. Par exemple, le document WO-A-99/49424 décrit un système de transaction commerciale sécurisé entre un marchand et un utilisateur, basé sur l'utilisation de cartes de crédit à usage limité, et permettant ainsi d'obtenir la fonctionnalité d'une carte de crédit, sans jamais révéler le numéro de la carte de crédit principale de l'utilisateur. L'objet de la présente demande de brevet est de détailler un mode particulier d'émission de carte virtuelle utilisant une carte de paiement réelle.

En effet, comme cela a été détaillé ci-dessus, une carte de paiement réelle de type à microprocesseur (ou à puce) est un outil extrêmement sécurisé lorsqu'il est utilisé en combinaison avec des terminaux de paiement adapté.

La présente invention vise donc à apporter une nouvelle solution à l'émission des cartes virtuelles, cette invention mettant en jeu des cartes de paiement réelles tout en demeurant simple et peu coûteuse.

Le procédé selon l'invention vise à sécuriser une transaction commerciale entre un fournisseur et un acheteur pour laquelle l'acheteur doit communiquer des informations personnelles tel qu'un numéro de carte de paiement.

L'invention est définie par l'objet de la revendication 1.

Le procédé consiste à obtenir au moyen d'une première carte dé paiement à microprocesseur une seconde carte de paiement d'un établissement émetteur approprié et à utiliser les données de là seconde carte tel que son numéro lors de la transaction, la seconde carte n'étant valide que pour un nombre limité de transactions.

Selon une autre caractéristique du procédé objet de l'invention, la seconde carte de paiement est obtenue, via le réseau Internet, en se connectant à un serveur informatique géré par l'établissement émetteur.

Selon une autre caractéristique du procédé objet de l'invention, lors de cette connexion, l'utilisateur s'identifîe au serveur informatique en utilisant sa première carte de paiement introduite dans un lecteur et couplée à un ordinateur et ce, pour adresser au serveur un message approprié.

Selon une autre caractéristique du procédé objet de l'invention, le message, adressé par utilisateur au serveur via sa première carte, est un certificat d'authentification et d'intégrité émetteur combinant des données et une signature, la signature étant obtenue par cryptage de ces données par un algorithme de cryptage contenu dans ladite première carte.

Selon une autre caractéristique du procédé objet de l'invention, le message, adressé par l'utilisateur au serveur via sa première carte, est généré après la saisie d'un code secret associé à la première carte et connu du seul utilisateur.

Selon une autre caractéristique du procédé objet de l'invention, le message, adressé par l'utilisateur au serveur via sa première carte est utilisé par le serveur pour élaborer la seconde carte et en particulier son numéro.

Selon une autre caractéristique du procédé objet de l'invention, la seconde carte de paiement n'est valide que pour une seule transaction.

Selon une autre caractéristique du procédé objet de l'invéntion, la seconde carte de paiement n'est valide que une durée limitée comprise entre quelques dizaines de secondes et quelques jours.

Selon une autre caractéristique du procédé objet de l'invention, la seconde carte de paiement comporte un numéro de carte et une date d'expiration dont les formats sont identiques à celle de ladite première carte de paiement et ce, de façon à les rendre indifférentiables par les marchands.

Selon, une autre caractéristique du procédé objet de l'invention, les transactions concernées sont les transactions électroniques sur l'Internet et le Web.

On comprendra mieux les buts, aspects et avantages de la présente invention, d'après la description donnée ci-après d'un mode de réalisation de l'invention, présenté à titre d'exemple non limitatif, en se référant au dessin annexe, dans lequel :

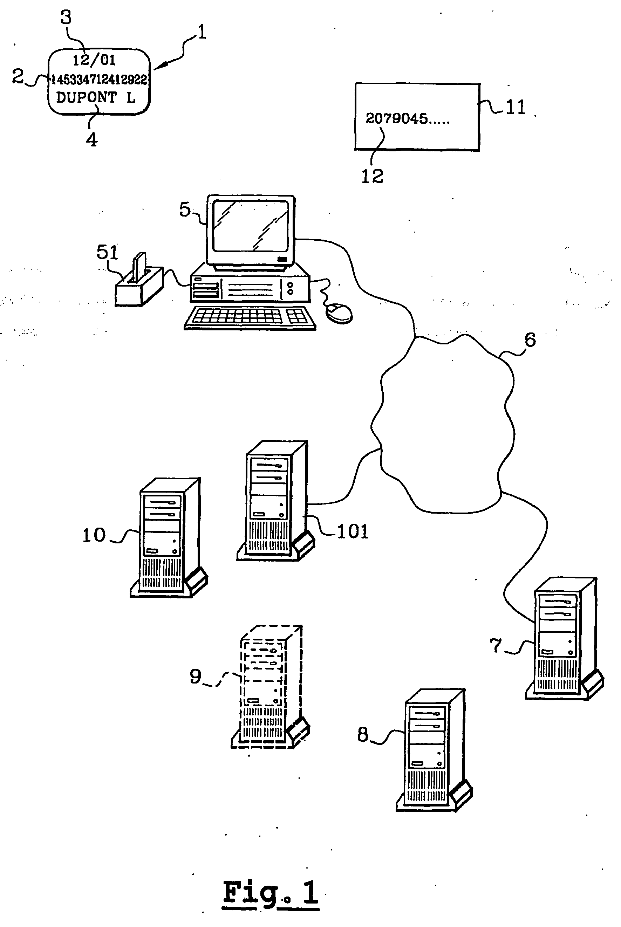

la figure 1 est une vue schématique du système nécessaire à la mise en oeuvre d'une transaction électronique selon la présente invention.

En se reportant au dessin, seuls les éléments utiles à la compréhension de l'invention, ont été figurés.

L'exemple choisi pour illustrer le procédé objet de la présente invention, concerne une transaction électronique réalisée sur le réseau Internet. Bien qu'elle soit particulièrement adaptée aux transactions électroniques sur l'Internet, l'invention n'est pas limitée a ces seules transactions mais concerné plus généralement toutes les transactions acquittées au moyen de cartes de paiement.

Le système présenté à la figure 1 permet donc de réaliser en toute sécurité une transaction électronique entre un utilisateur et un site marchand distant référence 7.

L'utilisateur, non figuré, est installé devant une station qui est par exemple son ordinateur personnel 5. Cet ordinateur 5 est connecté au réseau Internet 6 et permet d'accéder au site Web marchand 7.

Cet utilisateur dispose par ailleurs, d'une carte de paiement 1 à circuit électronique obtenue de façon classique auprès d'un établissement financier approprié qui est représenté par un serveur 10 de gestion informatique des cartes de paiement 1.

La carte de paiement 1 se présente sous la forme classique d'une plaque rectangulaire en matière plastique aux dimensions ISO d'environ 8cm sur 5cm, à l'intérieur de laquelle est inséré un microprocesseur. Cette carte 1 peut présenter des contacts électriques affleurants ou bien encore être du type sans contact. Au recto de la carte sont inscrits le nom 4 du titulaire de la carte, une daté d'expiration 3, un numéro de carte 2 à seize chiffres, encore appelé PAN, ainsi qu'éventuellement un numéro de compte.

La carte dispose par ailleurs d'un numéro additionnel sur trois caractères appelé CVV. Ce numéro CVV peut servir d'extension au PAN 2, permettant de porter ce dernier à dix-neuf chiffrés (PAN étendu), et donc améliore encore la sécurité des transactions. Ces trois chiffres sont par exemple le résultat d'un calcul avec une clé de chiffrement, appliqué au PAN à seize chiffres. Le CVV n'est pas embossé sur la carte contrairement au PAN et figure, écrit au seul verso de la carte, dans le panneau de signature. Le CVV ne figure donc sur aucun reçu et, seul celui qui a la carte en main peut lire ces chiffres et les énoncer dans la lecture lorsqu'on lui demande son PAN étendu. Introduits manuellement sur un terminal de paiement POS par un marchand, ils sont vérifiés par l'organisme émetteur de la carte lors de la demande d'autorisation.

De façon parfaitement connue et sans qu'il soit nécessaire de rentrer dans les détails, l'établissement émetteur de la carte 1 est donc équipé d'un serveur 10 apte à délivrer et à gérer les cartes de paiement et les transactions opérées au moyen de ces cartes. Ce serveur 10 peut opérer seul la gestion de ses cartes ou bien il peut faire appel à un serveur centralisé 9 qui gère notamment pour le compte de plusieurs établissements financiers, les cartes en vigueur et celles qui sont frappées d'interdiction.

De façon parfaitement similaire le fournisseur propriétaire du site marchand 7, dispose d'un compte bancaire auprès d'un établissement financier disposant d'un serveur de gestion 8, l'établissement financier du fournisseur étant distinct ou non de celui du titulaire.

Le titulaire de la carte de paiement 1 consulte donc sur son ordiriateur 5 une page du serveur marchand 7 sur laquelle on lui propose d'acheter un article. S'étant décidé à acquérir cet article auprès du serveur marchand 7, le titulaire déclenche alors la commande qu'il doit valider en fournissant les données de paiement requises par le fournisseur et notamment les références d'une carte de paiement.

L'utilisateur opère alors, comme cela sera détaillé ci-après, l'ouverture d'une seconde cession à travers le reseau Internet pour accéder à un serveur 101 apte à lui délivrer une carte de paiement virtuelle 11, ci-après appelée VPC. Une fois cette carte de paiement virtuelle 11 obtenue, l'utilisateur est capable de transmettre les données de cette carte au serveur marchand 7. Pour ce faire le titulaire tape simplement ces données sur le clavier de son ordinateur 5 et les transmet via le réseau Internet au serveur marchand 7. La communication s'opère selon le protocole en vigueur sur le serveur marchand 7, c'est à dire de manière ouverte ou bien de manière cachée par l'intermédiaire d'un logiciel de cryptage approprié (DES, RSA, etc.).

Le fournisseur vérifie alors la validité de ce moyen de paiement soit à travers son établissement financier 8, soit à travers le serveur central 9 ou bien encore directement auprès du serveur 101. Ayant obtenue en retour l'autorisation demandée, la transaction est validée et le bien ou le service commandé délivré à l'utilisateur. Le fournisseur n'a plus alors qu'à remettre la facture correspondante à son établissement financier pour que ce dernier puisse opérer le transfert des fonds.

Les cartes de paiement VPC 11 sont parfaitement similaires quant aux prestations offertes à la carte 1, leurs principales différences résident en ce qu'elles ne sont valables que pour un nombre limité de transactions. De préférence, les cartes VPC 11 ne sont valables que pour une seule transaction et, de préférence également elles n'ont qu'une durée de vie relativement brève, de quelques dizaines de secondes à quelques jours.

Bien que pouvant être utilisées pour toute transaction commerciale, ces cartes de paiement VPC 11 sont particulièrement adaptées pour les transactions à distance et notamment les transactions sur Internet. Les cartes de paiement VPC 11 peuvent en particulier ne pas avoir de support physique (affichage temporaire sur un écran ou encore communication verbale) ou bien encore n'avoir qu'un support physique rudimentaire tel' qu'un simple document papier (ticket imprimé par un terminal approprié, télécopie, courrier, etc.). Elles peuvent toutefois également avoir le même support qu'une carte traditionnelle : carte magnétique ou à circuit électronique.

Hormis ces différences, les cartes de paiement VPC 11 sont parfaitement similaires aux autres cartes notamment quant au format et au codage de leurs numéros PAN 12 ou à leur date d'expiration 13 (format à quatre chiffres : mois/année (08/00)). Ainsi, dans la mesure où les cartes de paiement traditionnelles 1 comportent des numéros PAN 2 à seize chiffres, alors chaque numéro PAN 12 comporte aussi seize chiffres : les six premiers chiffres formant le code BIN de l'organisme financier émetteur et le dernier chiffre le code d'authentification de Luhn. Bien évidemment le format à seize chiffres n'est pas limitatif de l'invention, les numéros PAN 2 et 12 pouvant prendre n'importe quelle autre forme : série de dix-neuf chiffres, série alphanumérique de longueur donnée, etc.

Il est par ailleurs possible de fournir à chaque carte VPC 11, un code secret 14 encore appelé code PIN (Personal Identification Number). La carte 11 comporte donc également de façon plus précise sa date et son heure de fin de validité 16 (par exemple au format jour/mois/année heure (22/08/00 10:31)). Cette information 16 est destinée au seul titulaire de la carte 11 alors que l'information 13 est destinée à être communiquée au fournisseur comme lors d'une transaction avec la carte 1.

De même, chaque carte VPC 11 peut recevoir un numéro CVV approprié permettant d'avoir un PAN étendu à dix-neuf chiffres.

Le titulaire de la carte VPC 11 est donc parfaitement apte à payer une transaction électronique avec le site marchand 7 de la même manière qu'avec sa carte 1.

Etant donné, que le numéro PAN 12 saisi par le titulaire est parfaitement similaire au numéro PAN 2, le fournisseur n'a pas à modifier ses procédures transactionnelles pour accepter la commande du titulaire de la carte 11. Pour le fournisseur, il n'existe ainsi aucune différence entre une transaction payée au moyen d'une VPC 11 et une transaction payée au moyen d'une carte de paiement traditionnelle 1. Le fournisseur n'a d'ailleurs aucune possibilité de différencier les numéros et donc la nature des cartes de paiement qui lui sont communiquées.

La création de telles cartes VPC 11 permet de ne pas remettre en cause les procédures existantes de validation des transactions mises en place entre les fournisseurs et les acheteurs.

Les fournisseurs conservent également leurs procédures actuelles de validations des informations bancaires reçues de leurs clients. Il leur est simplement demandé de vérifier la validité de la carte dont ils ont reçu les coordonnées, puisque la carte peut n'avoir qu'une durée de vie très brève. Il s'agit toutefois d'une action déjà mise en oeuvre par la quasi-totalité des sites marchands qui demandent, avant d'accepter la transaction et de livrer le produit ou service correspondant, auprès de rétablissement émetteur ou d'un serveur central 9 une demande d'autorisation et ce, pour vérifier que la carte qui leur est proposée est bien authentique, qu'elle n'est pas frappée d'opposition ou encore que le montant de la transaction n'excède pas le pouvoir financier de la carte.

De même, du côté des établissements financiers de fournisseurs, les processus d'encaissement des factures qu'elles proviennent des cartes de paiement VPC 11 ou des cartes traditionnelles 1 sont identiques.

Indépendant du fait qu'une carte VPC 11 n'est valable que pour un nombre donné de transactions et de préférence une seule transaction, la sécurité offerte par l'emploi d'une telle carte peut encore être renforcée en limitant l'usage de cette carte à un marchand 7 donné, ou encore à un montant plafonné de dépense ou encore au montant exact de la transaction pour laquelle la carte VPC 11 a été demandée.

L'utilisateur souhaitant obtenir une carte VPC 11 a plusieurs solutions possibles. En particulier il peut appeler le serveur 101 via un téléphone portable comme cela a été détaillé dans la demande de brevet précitée WO 02/19284 déposée par la Demanderesse. La présente invention a pour objet une autre solution utilisant le réseau Internet 6 et les cartes bancaires à microprocesseur du type 1.

Selon l'invention, le serveur 101 dispose donc d'une adresse IP et il est accessible via le réseau Internet 6 depuis l'ordinateur 5 de l'utilisateur. L'utilisateur n'a donc qu'à établir une connexion Internet avec le site du serveur 101 et à faire une demande de carte VPC 11 pour voir en retour cette dernière s'afficher sur l'écran de son ordinateur 5. Pour garantir toutefois la sécurité d'une telle demande et éviter toute fraude, il est nécessaire que l'utilisateur puisse s'identifier de façon certaine auprès du serveur 101 lors de sa connexion.

Cette identification est permise grâce à l'utilisation de la carte bancaire à microprocesseur 1 dont dispose l'utilisateur et grâce aux ressources cryptographiques contenues dans cette carte 1 tel qu'un algorithme de cryptage de type DES (DES : Data Encryption Standard) ou de tout autre type (RSA, etc.): Pour ce faire, il suffit d'adresser au serveur 101 lors de la connexion avec ce dernier un message contenant des données cryptées au moyen des ressources cryptographiques de la carte 1. Le serveur I01, disposant de ressources correspondantes, est alors capable de vérifier l'authenticité du message et d'en déduire l'identité de l'utilisateur puisque seul ce dernier est à même de disposer physiquement de la carte 1 et que seule cette carte 1 est à même de générer un tel message.

La mise en oeuvre d'un tel procédé est relativement simple puisque l'envoi d'un tel message est déjà prévu dans les cartes bancaires à microprocesseur 1. En effet, lors d'une transaction effectuée au moyen d'un terminal de paiement, le terminal adresse au serveur bancaire les données de la transaction : référence du commerçant, référence de la carte, montant et date de la transaction, etc.

Ces données sont adressées au serveur bancaire accompagnées d'une signature électronique formée par le cryptage de ces données à partir de programmes de cryptographie contenue dans la carte bancaire (carte à microprocesseur) ou dans le terminal (carte magnétique). Ces données et cette signature forment le certificat d'authentification et d'intégrité émetteur, encore appelé CAI. Ce CAI est vérifié par le serveur bancaire afin d'authentifier la transaction entre le commerçant et son client.

Le serveur bancaire vérifie le CAI en comparant la signature traitée par un algorithme de cryptage inverse et les données qui l'accompagnent ou bien en appliquant le même algorithme de cryptage sur ces données et en comparant la signature obtenue avec celle transmise. Il est à noter que le CAI (données et signature) est transmis de préférence sous forme cryptée, mais il peut également être transmis en clair.

Le calcul de la signature et l'envoi du CAI est généralement déclenché par l'entrée du code secret ou code PIN par l'utilisateur sur le clavier du terminal de paiement. La reconnaissance du code PIN par la carte lance le programme de calcul de la signature sur les données de la transaction qui ont été préalablement saisies.

Selon l'invention, il s'agit donc lors de la connexion au serveur 101 de lui adresser un message de type CAI, la vérification de ce dernier par le serveur 101 garantissant l'identité de l'utilisateur.

Pour ce faire, l'utilisateur doit disposer d'un lecteur de carte bancaire 51 connecté à son ordinateur afin de pouvoir accéder aux ressources logicielles de sa carte 1.

L'ordinateur ayant reçu un logiciel approprié de type émulation de terminal bancaire POS, l'utilisateur va simuler avec son ordinateur et son lecteur de carte le rôle d'un tel terminal bancaire et adresser au serveur 101 un certificat d'authentification et d'intégrité ou CAI et ce n'est qu'après la réception et la vérification de ce CAI, que le serveur 101 va générer l'envoi d'une carte VPC 11.

L'accès logiciel à la carte s'effectue donc de façon classique par présentation du code PIN. On peut utiliser un lecteur sécurisé 51 avec clavier mais on peut tout aussi bien utiliser un lecteur sans clavier, type Reflex 72 commercialisé par la société Schlumberger, dans ce cas le code PIN est saisi directement sur le clavier de l'ordinateur. On peut également envisager l'utilisation d'un code PIN crypté (émis par le serveur) dans le cas des cartes bancaires à crypto processeur (cartes Schlumberger Palmera Protect)

L'introduction du code PIN en clair sur le clavier de l'ordinateur 5 ne présenté pas de risque. Accéder à un code PIN seul, est sans intérêt dès lors qu'on ne dispose pas de la carte physique associée.

Dès lors que le code PIN est reconnu par la carte 1, cette dernière est capable de générer la signature d'une transaction et donc d'émettre un certificat d'authentification et d'intégrité émetteur ou CAI. La carte 1 permet l'émssion de ce certificat à travers le processus de déroulement d'une transaction.

Préalablement à la saisie de son code PIN, en clair ou crypté, l'utilisateur introduit donc les données d'une transaction fictive, qui ne sert qu'à l'élaboration d'un CAI à destination du serveur 101, et en particulier un montant de transaction, ce montant pouvant être ou non le même montant que celui de la transaction en cours avec le serveur 7 pour laquelle la carte VPC 11 a été demandée. Bien évidemment, cette transaction qui ne sert qu'à l'obtention d'une carte VPC ne sera jamais débitée sur le compte de l'utilisateur.

Le certificat est alors calculé avec l'algorithme de cryptage (DES, etc.) de la carte 1 et éventuellement une clé émettrice CT0. Dans les données à certifier, outre le montant, peut figurer l'identifiant accepteur, s'il est disponible, ou un code convenu.

Le certificat est envoyé au serveur 101 où il est recalculé pour vérification en comparant la signature traitée par un algorithme de cryptage inverse et les données qui l'accompagnent ou bien en, appliquant le même algorithme de cryptage sur ces données et en comparant la signature obtenue avec celle transmise. Ce CAI est transmis au serveur 101 de préférence sous forme cryptée, mais il peut également être transmis en clair.

L'authenticité du CAI ayant été vérifiée par le serveur 101, ce dernier est à même alors d'indentifier de façon certaine l'utilisateur, puisque tout tiers ne disposant ni de la carte 1 ni code PIN correspondant ne peut être capable de générer un CAI authentique. L'utilisateur ayant été identifié avec certitude, le serveur 101 peut donc lui adresser en retour sa carte VPC 11.

Il est à noter que le CAI ainsi adressé par l'utilisateur au serveur 101, peut être utilisé pour élaborer la carte VPC 11 et plus particulièrement son numéro PAN 12 ou encore le CVV.

Ainsi grâce à la présente invention, il est possible à l'utilisateur de s'identifier de façon certaine auprès du serveur 101 tout en utilisant l'Internet et ce, sans risque de fraude, en utilisant simplement les fonctionnalités des cartes bancaires actuelles et futures, et en particulier leur aptitude à générer un certificat émetteur CAI, comme moyens d'authentification et d'identification. La présente invention n'exige donc pas de ressources matérielles importantes à sa mise en oeuvre puisque tous les types de lecteurs de cartes sont utilisables et qu'il n'y a pas de critère particulier quant à la saisie du code PIN, laquelle pouvant se faire en clair sur le clavier de l'ordinateur.

Le serveur 101 ayant affecté une carte VPC 11 à l'utilisateur, il communique en retour sur l'écran de l'ordinateur 5 de ce dernier, le numéro PAN 12, la durée de validité 16 ainsi qu'un éventuellement mode de passe 14 et un nombre CVV permettant un numéro PAN étendu à dix-neuf chiffres.

L'utilisateur peut alors arrêter sa connexion au serveur 101 et continuer celle avec le serveur marchand 7 en saisissant le numéro de sa carte virtuelle VPC 11. Sitôt enregistrée la transaction avec le serveur marchand 7, le serveur 101 en est informé et invalidé la carte VPC 11 (dans mesure où cette dernière n'est valide qu'une fois) de sorte que celle-ci ne peut plus être utilisée ultérieurement.

Bien évidemment, le mode de réalisation illustré n'a été donné qu'à titre d'exemple et n'est absolument pas limitatif de l'ensemble des solutions pouvant être mise en oeuvre grâce à la présente invention.

## Revendications

1. Procédé pour sécuriser une transaction commerciale entre un marchand (7) et un utilisateur pour laquelle l'utilisateur doit communiquer des informations personnelles tel qu'un numéro de carte de paiement, comprenant la connexion via le réseau Internet (6) à un serveur informatique (101) géré par un établissement émetteur approprié, l'adressage audit serveur (101) d'un message approprié, l'obtention en retour d'une seconde carte de paiement (11) dudit établissement émetteur approprié (101) l'utilisation des données de ladite seconde carte (11) tel que son numéro (12) lors de ladite transaction, ladite seconde carte (11) n'étant valide que pour un nombre limité de transactions, **caractérisé en ce qu'**il comprend en outre l'identification audit serveur informatique (1-01) en utilisant une première carte de paiement à microprocesseur introduite dans un lecteur (51) et couplée à un ordinateur (5), **en ce que** ledit message est un certificat d'authentification et d'intégrité émetteur (GAI) combinant des données et une signature, ladite signature étant obtenue par cryptage desdites données par un algorithme de cryptage contenu dans la première carte, et **en ce que** ledit message est utilisé par ledit serveur (101) pour élaborer ladite seconde carte (11) et en particulier son numéro (12).

2. Procédé selon la revendication 1, **caractérisé en ce que** ledit message est généré après la saisie d'un code secret associé à ladite première carte et connu du seul utilisateur.

3. Procédé selon l'une quelconque des revendications précédentes, **caractérisé en ce que** ladite seconde carte de paiement (11) n'est valide que pour une seule transaction.

4. Procédé selon l'une quelconque des revendications précédentes, **caractérisé en ce que** ladite seconde carte de paiement (11) n'est valide que pour une durée limitée comprise entre quelques dizaines de secondes et quelques jours.

5. Procédé selon l'une quelconque des revendications précédentes, **caractérisé en ce que** ladite seconde carte de paiement (11) comporte un numéro de carte (12) et une date d'expiration (13) dont les formats sont identiques à celle de ladite première carte de paiement (1) et ce, de façon à les rendre indifférentiables par les marchands.

6. Procédé selon l'une quelconque des revendications précédentes, **caractérisé en ce que** les transactions concernées sont les transactions électroniques sur l'Internet et le Web.

## Patentansprüche

1. Verfahren zum Sichern einer Handelstransaktion zwischen einem Händler (7) und einem Anwender, für die der Anwender persönliche Daten wie zum Beispiel eine Zahlkartennummer angeben muss, wobei dieses Verfahren die Verbindungsherstellung über das Internet (6) zu einem Server (101) umfasst, der von einer geeigneten Ausstellerbehörde verwaltet wird, sowie das Adressieren einer geeigneten Mitteilung an den besagten Server '(101), den Erhalt dafür einer zweiten Zahlkarte (11) der besagten geeigneten Ausstellerbehörde (101), die Anwendung der Daten dieser zweiten Karte (11) wie zum Beispiel ihre Nummer (12) bei der Transaktion, wobei diese zweite Karte (11) nur für eine begrenzte Anzahl von Transaktionen gültig ist, **dadurch gekennzeichnet, dass** es unter anderem die Identifizierung gegenüber dem Server (101) durch Anwendung einer ersten Zahlkarte mit Mikroprozessor umfasst, die in ein Lesegerät (51) geschoben und mit einem Computer (5) gekoppelt ist, sowie **dadurch**, dass die besagte Mitteilung eine Authentifizierungs- und Unversehrtheitsbescheinigung des Ausstellers (CAI) ist, die Daten und eine Signatur kombiniert, wobei die Signatur durch Verschlüsseln der besagten Daten durch einen in der ersten Karte enthaltenen Verschlüsselungsalgorithmus erhalten wird, und **dadurch**, dass der besagte Server (101) die besagte Mitteilung verwendet, um die besagte zweite Karte (11) auszustellen und insbesondere ihre Nummer (12).

2. Verfahren nach Anspruch 1, **dadurch gekennzeichnet, dass** die besagte Mitteilung nach Eingabe eines Geheimcodes erstellt wird, der der besagten ersten Karte zugeordnet ist und dem alleinigen Anwender bekannt ist.

3. Verfahren nach einem beliebigen der vorausgehenden Ansprüche, **dadurch gekennzeichnet, dass** die besagte zweite Zahlkarte (11) nur für eine einzige Transaktion gültig ist.

4. Verfahren nach einem beliebigen der vorausgehenden Ansprüche, **dadurch gekennzeichnet, dass** die besagte zweite Zahlkarte (11) nur für einen begrenzten Zeitraum gültig ist, der von einigen Zehntelsekunden bis einige Tage reicht.

5. Verfahren nach einem beliebigen der vorausgehenden Ansprüche, **dadurch gekennzeichnet, dass** die besagte zweite Zahlkarte (11) eine Kartennummer (12) und ein Verfalldatum (13) umfasst, deren jeweiliges Format mit dem der besagten ersten Zahlkarte (1) identisch ist und zwar derart, dass es von den Händlern nicht unterschieden werden kann.

6. Verfahren nach einem beliebigen der vorausgehenden Ansprüche, **dadurch gekennzeichnet, dass** die betreffenden Transaktionen elektronische Transaktionen im Internet und Web sind.

## Claims

1. Method to secure a commercial transaction between a merchant (7) and a user for which the user must communicate personal information such as a payment card number, including the connection via the Internet (6) to a computer server (101) managed by a suitable issuing establishment, transmission to said server (101) of a suitable message, obtaining by return a second payment card (11) from said suitable issuing establishment (101), use of data from said second card (11) such that its number (12) during said transaction, said second card (11) only being valid for a limited number of transactions, **characterised in that** it also comprises the identification at said computer server (101) by using a first microprocessor payment card inserted in a reader (51) and coupled to a computer (5), and **in that** said message is an issuer authentication and integrity certificate (CAI) combining data and a signature, said signature being obtained by encryption of said data by an encryption algorithm contained in the first card, and **in that** said message is used by said server (101) to produce said second card (11) and in particular its number (12).

2. Method according to claim 1, **characterised in that** said message is generated after entering a secret code associated with said first card and known by the user alone.

3. Method according to any of the previous claims, **characterised in that** said second payment card (11) is only valid for a single transaction.

4. Method according to any of the previous claims, **characterised in that** said second payment card (11) is only valid for a limited duration from a few tenths of a second to several days.

5. Method according to any of the previous claims, **characterised in that** said second payment card (11) has a card number (12) and an expiry date (13) whose formats are identical to that of said first payment card (1) so that they are indistinguishable by the merchants.

6. Method according to any of the previous claims, **characterised in that** the transactions concerned are electronic transactions on the Internet and the Web.
